# EUROPEAN PATENT APPLICATION

(11) **EP 4 517 620 A1**
(43) Date of publication of application: **05.03.2025**
(21) Application number: 23465527.2
(22) Date of filing: 28.08.2023
(51) Int. Cl.: G06Q 10/0875, G06Q 10/101, G06Q 10/087, G06F 16/25, G06Q 30/018, H04L 9/32, H04L 9/40

(54) **SYSTEM FOR PROVIDING CREDENTIALS FOR A PRODUCT WITHIN A SUPPLY CHAIN**

(71) Applicant: Siemens Aktiengesellschaft, 80333 München (DE)
(72) Inventor: KASINATHAN, Prabhakaran, 81549 München (DE); SHAMS, Saad Bin, 81549 München (DE); SELTZSAM, Stefan, 85653 Aying (DE); LEONTE, Ionut Alexandru, 022174 Bucharest (RO)
(74) Representative: Siemens Patent Attorneys

(57) **Abstract**

A system (1) for providing credentials (C1, C2, C3) for a product (P1, P2, FP) within a supply chain is suggested. The system (1) comprises supply participants (SP1, SP2, SP3), each supply participant being part of the supply chain and providing a product (P1, P2, FP), an end participant (EP) being the end of the supply chain and receiving a final product (FP), and a certifying unit (CU). Each supply participant (SP1, SP2, SP3) is configured to communicate with the certifying unit (CU) and the preceding supply participant as well as the subsequent supply participant. Each supply participant (SP1, SP2, SP3) is configured to request and to receive a credential of its product comprising one or more attributes (A1, A2, A3, A4, A5, A6) from the certifying unit (CU), to adapt and forward the received credential to the subsequent supply participant, and to forward credentials received from the preceding supply participant to the subsequent supply participant.

This system provides the advantage that credentials for each product may be once requested and then be forwarded and reused without the need of recertification.

## Description

The present invention relates to a system for providing credentials for a product within a supply chain. Moreover, the invention relates to a method for providing credentials for a product within a supply chain and a computer program product comprising a program code for executing such a method.

In supply chains, which provide a final product at the end of the supply chain, typically different entities are present within the supply chain, which all contribute to the final product. The last entity within the supply chain typically provides the final product, wherein the preceding entities provide sub-products which are comprised in the final product. Typically, a first sub-product of the first entity is forwarded to the second entity which will provide the second sub-product which comprises the first sub-product, the second sub-product of the second entity is forwarded to the third entity which will provide the third sub-product which comprises the first and the second sub-product and so on.

The entities may be for example: suppliers which supplies raw materials to integrators and manufacturers; integrators which consume raw materials from suppliers and produce small parts for bigger manufacturers; manufacturers which produce end or final products such as a car that uses materials and parts from suppliers and integrators; customers which buy the final products.

In this context, it should be noted that, independent of the grammatical term usage, individuals with male, female or other gender identities are included within the term.

In typical supply chain use cases, there is a need for the involved entities to share a subset of supply chain information with each other such as a Product Carbon Footprint (PCF) of the respective sub-product to calculate and/or aggregate the total carbon emissions of the final product. Also, other information, like sub-product specific information, entity specific information or a combination, can be included in the supply chain information. In particular, the customers may have an interest in the supply chain information of the final product, for example in the PCF of the final product or any other information, like geographical information of the several sub-products of the final product. The different entities, for example the customers, may also desire to have a verification of the supply chain information of the several sub-products. For this purpose, certifiers may be included in the supply chain for certifying the supply chain information, for example certain attributes of the complete final product, of individual parts or sub-products, of processes involved in producing a sub-product etc.

However, some or all of these entities (suppliers and integrators) might not want to reveal certain attributes (e.g., name of their suppliers) to the entities following in the supply chain, for example the manufactures of the next stage of the product or the customers.

A current approach is as follows. An entity A requests an individual proof-request from entity B. However, the corresponding response from entity B to entity A cannot be passed along the supply chain to further entities as this would disclose information of entity B to further entities (besides entity A) which could violate certain confidentiality requirements. Further, this means that a verifier V requesting proof of entity A with respect to the supply chain (including entity A and B) cannot validate a proof-response statement of entity A based on the proof-response of entity B as this proof-response was issued from B to A and cannot be forwarded.

Thus, entity A has to re-certify the attribute data with a 3rd party certifier (C) who would mask entity B's identity and issues a new credential to entity A which entity A can re-use to present proof-responses for generic proof-requests from different verifiers e.g., in this case verifier V. Therefore, in this approach, a verifiable data registry is necessary to validate the proof-responses and identities. Proof-responses in this context refer to information or attributes of the sub-products being provided by different entities in the supply chain.

However, this approach is not flexible and involves multiple exchanges of messages between involved entities and re-certification of proof-responses as it is not possible to pass these proof-responses along the supply chain without violating possible confidential requirements.

It is one object of the present invention to provide a simplified and automated way of forwarding information with respect to sub-products within a supply chain without the need to re-certification of each information before passing it along the supply chain, while maintaining confidence requirements.

Accordingly, a system for providing credentials for a product within a supply chain is suggested. The system comprises supply participants, wherein each supply participant is part of the supply chain and provides a product, the product being a sub-product for a final product or the final product.

Further, the system comprises an end participant, which is the end of the supply chain and receives the final product. In particular, the final product is composed of all sub products of the supply chain.

The system further comprises a certifying unit which is configured to generate and provide credentials for the sub-products and/or the final product.

Each supply participant is configured to communicate with the certifying unit and the preceding supply participant as well as the subsequent supply participant within the supply chain. It should be noted that, in this context, supply participants may refer to an entity which provides the sub-product or final product (for example a manufacturer within a supply chain providing automobile parts and a vehicle as final product) and may at the same time refer to an entity which is responsible for communicating via a communication network for exchanging credentials and/or other messages (e.g., messages for requesting a credential). The communication network may be any kind of network, like a global network (i.e., internet) or local network (LAN, WLAN), in the form of a wireless or wired network, etc.

Further, each supply participant is configured to request and to receive a credential of its product comprising one or more attributes from the certifying unit, to adapt and forward the received credential to the subsequent supply participant, and to forward credentials received from the preceding supply participant to the subsequent supply participant.

Credential in this context refers to a certified information including attributes of the corresponding sub-product or final product. Attributes may be sub-product or final product related information (like used material(s), Product Carbon Footprint (PCF), any information regarding the manufacturing etc.), supply participant related information (like name, geographical location, etc.) or a combination. Further, the credential may comprise a plurality of attributes which can be individually included in the respective credential and may be adapted or customized as desired or required. Such an adaption or customization may for example refer to excluding specific attributes from the credentials when forwarding the credentials within the supply chain. This may be desired when one or more of the attributes should not be disclosed to subsequent supply participants.

In any case, when requesting the credential from the certifying unit, the credential as provided from the certifying unit may preferably comprise all attributes for the respective sub-product or final product. The supply participant may then individually decide which attributes should be disclosed to subsequent supply participants before forwarding the credential along the supply chain. In addition, the supply participants may adapt the credentials by selecting which attributes are allowed to be disclosed by subsequent supply participants to the next participants in the supply chain and/or selecting which attributes are not allowed to be disclosed by subsequent supply participants to the next participants in the supply chain.

The respective entity, e.g., the certifying unit or supply participant, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

Thus, the suggested system may ensure data sovereignty as the data owners, i.e., the supply participants, decide to whom the information within the credential shall be shared and disclosed. Further, the system may ensure transparency of the original supply chain data and certification as the credentials, i.e., certified attributes of a sub-product, may be passed from the initial data owners until the end of the supply chain. Further, the confidentiality of data owner's sensitive attributes may be ensured as the data owner of those attributes has control over who can see this information along the supply chain.

Moreover, the system may ensure the validity and/or integrity of the attributes of a sub-product or the final product as the credentials are each originally issued by the certifying unit and, although the credentials may be adapted for not disclosing all information, the validity and/or integrity of the credentials remains unaffected. Thus, each supply participant or the end participant may verify the data integrity and/or validity of the received credential(s).

According to a further embodiment, each supply participant is configured to adapt a credential by selecting one or more attributes to be included in the credential. Thus, each supply participant has complete control with respect to the attributes of the credential of its own product which should be disclosed to the subsequent supply participant(s) as well as the end participant.

According to a further embodiment, each supply participant is configured to adapt the credential of its own product and to adapt credentials of products of preceding supply participants. Thus, each supply participant can decide which attributes within the credential of its own sub-product or final product and which attributes within the credentials of the sub-products of the preceding supply participants should be disclosed to the subsequent supply participant or the end participant.

Further, the system allows the aggregation of attributes along the supply chain. Thus, a supply participant may have a credential which includes an attribute which is an aggregation of the same attributes of one or more supply participants. For example, the attribute defining the CO₂ emissions of the first supply participant may be added to the CO₂ emissions of the second supply participant and be included as a corresponding attribute in the credential of the second supply participant.

According to a further embodiment, each supply participant is configured to forward one or more of the credentials of the preceding supply participants. For example, a supply participant can include the credential of a preceding supply participant with some selected attributes and its own credential with selected attributes into one message. Such a message may comprise a plurality of credentials of a plurality of supply participants.

It should be noted that each supply participant may select attributes of its own credential to be forwarded. The subsequent supply participant can then select attributes within its own credential as well as in received credentials. However, in the received credentials, the supply participant can only select attributes which have been selected by the preceding supply participant(s) as the non-selected attributes are not forwarded.

According to a further embodiment, a credential is provided as JSON (JavaScript Object Notation) web token (JWT). In particular, the credential may be in the form of SD-JWT (Selective Disclosure for JSON web tokens) which is a format for enabling selective disclosure in JWTs. SD-JWT may be used for creating verifiable credentials and presenting it across the supply chain.

According to a further embodiment, the certifying unit comprises a plurality of certifiers, in particular one certifier for each supply participant.

This may provide the advantage that each supply participant may choose an individual certifier, for example based on any one of needs, business relations, reputation, or legal requirements of the country, or a combination.

According to a further embodiment, the supply participant, being last in the supply chain and providing the final product as product, is configured to forward the credential of the final product and one or more of the credentials of the sub-products of the preceding supply participants to the end participant. Thus, the end participant may receive all credentials from all supply participants, possibly with all or only some of the respective attributes. Further, as described above, the attributes of the credentials may be aggregated. Thus, a specific attribute of the credential of the last supply participant may be an aggregation of the corresponding attributes or values of the corresponding attributes of the preceding supply participants (as far as this specific attribute has been disclosed in the credentials of the preceding supply participants).

According to a further embodiment, the certifying unit is configured to certify the credential before sending the credential to the respective requesting supply participant. In an embodiment, the credential(s) may comprise a signature or other kind of authentication. Thus, the receiving participant within the supply chain may verify the integrity and/or authentication of the credential and thus of the comprised attributes. Further, as the credential is certified and preferably cryptographically signed, the participants of the supply chain receiving the credential may trust the credential and its content to be authentic, e.g., not compromised.

According to a further aspect, a method for providing credentials for a product within a supply chain within a system is suggested. The system may be the system as described above, i.e., comprising supply participants, each supply participant being part of the supply chain and providing a product, the product being a sub-product for the final product or the final product, an end participant being the end of the supply chain and receiving the final product, and a certifying unit.

The method comprises the following steps:
requesting and receiving, for example by each supply participant within the supply chain or only some of the supply participants, a credential of a product of a supply participant from the certifying unit, the credential comprising one or more attributes,
adapting and forwarding the received credential to a subsequent supply participant, and
forwarding the credentials received from a preceding supply participant to the subsequent supply participant.

As already described above, each supply participant may decide (by adapting the credential) which of its own attributes will be disclosed to the next participant and which attributes are allowed to be disclosed by the next participant to a participant following after that in the supply chain.

This method provides the advantage that each supply participant needs to certificate its product once by requesting a credential and can then use the respective credential multiple times, for example for multiple other participants in different supply chains, without the need for further re-certifications as it was needed in previous approaches.

It should be noted that each supply participant can decide whether credentials received from preceding supply participants should be forwarded and can decide which credentials from which preceding supply participants should be forwarded. Further, when there are no credentials from preceding supply participants, the respective supply participant might not forward such credentials. Moreover, although each supply participant is able to request and receive such a credential, it not necessary that each supply participant actually requests such a credential. It is also possible that only some of the supply participants request credentials from the certifying unit.

The embodiments and features described with reference to the system of the present invention apply mutatis mutandis to the method of the present invention.

According to a further embodiment, the method further comprises adapting a credential by selecting one or more attributes to be included in the forwarded credential.

According to a further embodiment, the method further comprises adapting the credential of the product of a supply participant and adapting credentials of products of preceding supply participants.

According to a further embodiment, the method further comprises forwarding one or more of the credentials of the preceding supply participants.

As described above, Selective Disclosure JWT (SD-JWT) may be used as credentials, in which attributes may be selected to be disclosed or not disclosed to subsequent participants within the supply chain. The credential may include the attributes of the sub or end product of the respective supply participants and may include aggregated attributes (i.e., attributes of two or more supply participants being aggregated). The issued original SD-JWTs are passed along the supply chain.

The data owner, i.e., the respective supply participants, may decide what information the next entity can process and control. Thus, each supply participant may decide which attributes are revealed to the subsequent next participant in the supply chain and which attributes may be disclosed by the subsequent next participant in the supply chain to the participant following after that. Therefore, a sub-set of the disclosed attributes may be chosen by a supply participant to be revealed to the subsequent supply participant along the supply chain. The data owner, i.e., the respective supply participant, may set an attribute in an "extended_use" field to yes or no, depending on whether the next supply participant should be able to reuse the shared attribute or not. The next supply participant may then reuse the respective attribute in a further SD-JWT.

According to a further embodiment, the method further comprises forwarding the credential of the final product and one or more of the credentials of sub-products of the preceding supply participants from the supply participant, being last in the supply chain and providing the final product as sub-product, to the end participant.

According to a further embodiment, the method further comprises certifying the credential before sending the credential to the respective requesting supply participant.

The issued SD-JWTs or credentials are reusable for multiple uses and purposes and can be sent for example to different entities without re-signing or requesting re-certification from different certifiers for reach request. The issued SD-JWTs can also be published directly with the product (e.g., print out of a QR code which renders a link where the end users can download SD-JWTs and get transparent information about original supply chain attributes and their values certified by the original certifiers).

In an alternative embodiment, the supply participants may use a self-certification of attributes via SD-JWT, i.e., instead of sending the attributes to an independent certifying unit, the supply participant may issue the SD-JWT with his public certificate. However, an independently validated and verified credential comprising attributes may be preferred.

As already described, the proposed method provides improved performance, efficiency and thus, has a relative cost-advantage to known or existing approaches. For instance, when using SD-JWT, any approved hashing algorithm and signature algorithm may be used. Hash operations are very fast in comparison. A signing operation is a bit more computationally expensive than hash operations. However, the here described system and method requires only one time signing operation when the certifying unit creates an SD-JWT. This may depend on the signing algorithm used within JWS. A sign verification operation is computationally inexpensive comparable to hash operations. This may also depend on the signing algorithm used within JWS.

According to a further aspect, the invention relates to a computer program product comprising a program code for executing the above-described method for providing credentials for a final product of a supply chain when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic block diagram of a system for providing credentials for a final product of a supply chain; and
- Fig. 2: shows a sequence of steps of a method for providing credentials for a final product of a supply chain in the system of Fig. 1.

In the Figures, like reference numerals designate like or functionally equivalent elements, unless otherwise indicated.

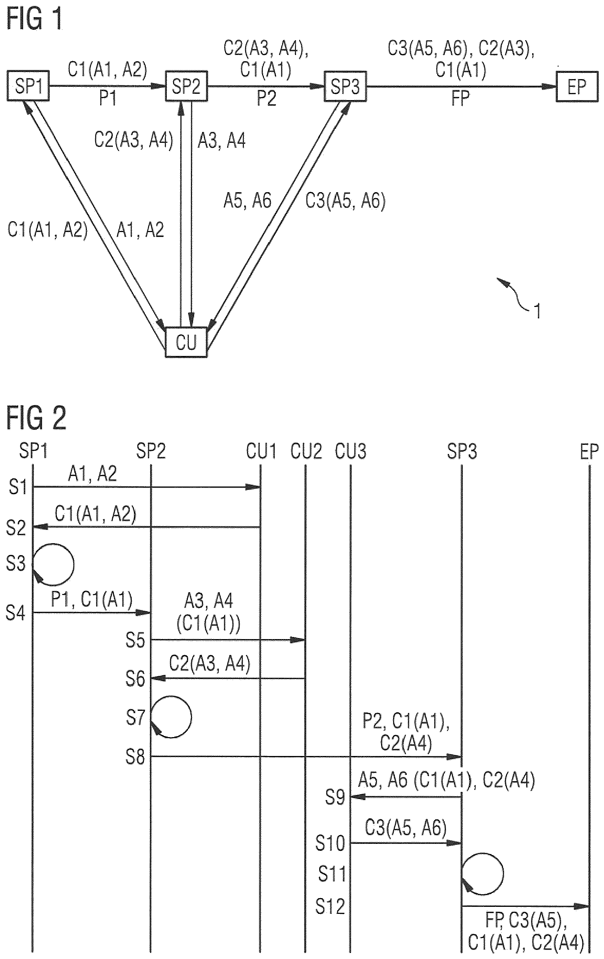

Fig. 1 shows a system 1 for providing credentials C1, C2, C3 for a product P1, P2, FP of a supply chain.

The system comprises several supply participants SP1, SP2, SP3, which are part of the supply chain. In Fig. 1, three supply participants SP1, SP2, SP3 are shown, wherein the first and the second supply participant SP1, SP2 provide a sub-product P1, P2 and supply participant SP3 provides the final product FP. The sub-product SP1 may be for example a raw material, sub-product SP2 may be the processed raw material and the final product FP may be a vehicle manufactured using the processed material SP2.

An end participant EP represents the end of the supply chain and receives the final product FP. When the end participant EP wants to receive any information about the final product FP, the end participant EP may request such information, e.g., CO₂ emissions during the supply chain, proof of origin or the like, from the last supply participant SP3 which has also provided the final product FP.

In order to provide such information in a certified way, the system 1 comprises a certifying unit CU. In Fig. 1, the certifying unit CU is shown as one single unit. However, as shown in Fig. 2, the certifying unit CU may also consist of several certifying units CU1, CU2, CU3. For example, each supply participant may work with a different certifying unit, or some may work with the same certifying unit and one participant may work with separate certifying unit. Also, any other combination is possible.

The supply participants SP1, SP2, SP3 are configured to communicate with the certifying unit CU and the preceding supply participant as well as the subsequent supply participant within the supply chain. Thus, supply participant SP1 can communicate with supply participant SP2 and the certifying unit CU, supply participant SP2 can communicate with supply participants SP1 and SP3 and the certifying unit CU, and supply participant SP3 can communicate with supply participant SP2 and the certifying unit CU. Further, supply participant SP3, the last one in the supply chain, can also communicate with the end participant EP.

Before forwarding the respective sub-product P1, P2 or the final product FP, each supply participant SP1, SP2, SP3 is configured to request and to receive a credential C1, C2, C3 of its sub-product P1, P2, P3 comprising one or more attributes A1 - A6 from the certifying unit CU.

For this purpose, the supply participant SP1 sends the attributes A1, A2 of its sub-product P1, or further information with respect to the sub-product P1, to the certifying unit CU and receives a credential C1 comprising the attributes A1, A2. Then, the supply participant SP1 can forward its sub-product P1 together with the corresponding credential C1(A1, A2) to the next supply participant SP2. Alternatively, supply participant SP1 may decide to not disclose all attributes A1, A2 and may only forward the credential C1 with attribute A1, i.e., C1(A1).

Next, the supply participant SP2 sends the attributes A3, A4 of its sub-product P2, or further information with respect to the sub-product P2, to the certifying unit CU and receives a credential C2 comprising the attributes A3, A4. SP2 may also send the credential C1(A1, A2) (or a sub-group of the attributes) to the certifying unit CU. In this case, the credential C2 not only comprises the attributes A3, A4 but also some or all of the attributes of SP1.

Then, the supply participant SP2 can forward its sub-product P2 together with the corresponding credential C2(A3, A4) to the next supply participant SP3. Alternatively, supply participant SP2 may decide to not disclose all attributes A3, A4 and may only forward the credential C2 with attribute A3, i.e., C2(A3). Further, supply participant SP2 may also forward the credential C1 from supply participant SP1, either as separate credential or included in the credential C2. Further, supply participant SP2 may decide to not disclose all information included in the credential C1 from supply participant SP1 to supply participant SP3 and may thus only forward the credential C1 including attribute A1, i.e., C1(A1), although SP2 has access to all attributes of C1 in the illustrated case.

The same applies to supply participant SP3, which sends the attributes A5, A6 of the final product FP, or further information with respect to the final product FP, to the certifying unit CU and receives a credential C3 comprising the attributes A5, A6. Further, SP3 may also send the credential C2(A3, A4) (or a sub-group of the attributes) and/or the credential C1(A1) to the certifying unit CU. In this case, the credential C3 not only comprises the attributes A5, A6 but also some or all of the attributes of SP1 or SP2.

Supply participant SP3 can forward final product FP together with the corresponding credential C3(A5, A6) to the end participant EP. Alternatively, supply participant SP3 may decide to not disclose all attributes A5, A6 and may only forward the credential C3 with attribute A6, i.e., C3(A6). Further, supply participant SP3 may also forward the credential C1 from supply participant SP1 and/or credential C2 from supply participant SP2, either as separate credential or included in the credential C3. Further, supply participant SP3 may also decide to not disclose all information included in the credentials C1, C2 to the end participant EP and may thus only forward the credential C1 including attribute A1, i.e., C1(A1), and C2 including attribute A3, i.e., C2(A3), although SP3 has access to all attributes of C2 in the illustrated case. Thus, each supply participant may decide which attributes of its own products as well as which attributes of the products of preceding supply participants should be disclosed to subsequent supply participants or the end participant.

Fig. 2 shows a corresponding method for providing credentials C1, C2, C3 for a product P1, P2, FP. In this method, the certifying unit CU comprises three certifiers CU1, CU2, CU3, one for each supply participant SP1, SP2, SP3.

In a first step S1, supply participant SP1 requests a credential C1 from the certifier CU1. The request includes the attributes A1, A2 of its product P1.

In step S2, the certifier CU1 sends the credential C1(A1, A2) back to the supply participant SP1.

In step S3, the supply participant SP1 can optionally adapt the credential C1(A1, A2) by selecting attributes A1, A2 to be disclosed or not disclosed to the subsequent supply participant SP2. In this case, supply participant SP1 decides to disclose only attribute A1.

Thus, in step S4, supply participant SP1 forwards its sub-product P1 and the credential C1(A1) to the supply participant SP2.

In step S5, supply participant SP2 requests a credential C2 from the certifier CU2. The request includes the attributes A3, A4 of its product P2. Optionally, the request may include the credential C1(A1), which the certifier C2 may integrate into credential C2.

In step S6, the certifier CU1 sends the credential C2(A3, A4) back to the supply participant SP2.

In step S7, the supply participant SP2 can optionally adapt the credential C2(A3, A4) by selecting attributes A3, A4 to be disclosed or not disclosed to the subsequent supply participant SP3. In this case, supply participant SP2 decides to disclose only attribute A4.

Thus, in step S8, supply participant SP2 forwards its sub-product P2 and the credential C2(A4) to the supply participant SP3. In addition, SP2 forwards also the credential C1(A1), either as separate credential or as credential included in C2. Further, it is also possible to aggregate the attributes, which means that for example attribute A4 may be based on information or properties of the sub-product P2 as well as the attribute A1 from the sub-product P1.

In step S9, supply participant SP3 requests a credential C3 from the certifier CU3. The request includes the attributes A5, A6 of the final product FP. Optionally, the request may include the credential C1(A1) and/or credential C2(A4), which the certifier C3 may integrate into credential C3.

In step S10, the certifier CU3 sends the credential C3(A5, A6) back to the supply participant SP3.

In step S11, the supply participant SP3 can optionally adapt the credential C3(A5, A6) by selecting attributes A5, A6 to be disclosed or not disclosed to the subsequent end participant EP. In this case, supply participant SP3 decides to disclose only attribute A5.

Thus, in step S12, supply participant SP3 forwards the final product FP and the credential C3(A5) to the end participant EP. In addition, SP3 forwards also the credential C1(A1) and C2(A4), either as separate credential or as credential included in C3. Further, as described above, it is also possible to aggregate the attributes, so that for example attribute A5 may be based on information or properties of the final product FP as well as the attribute A1 from the sub-product P1 and the attribute A4 from the sub-product P2.

Although the present invention has been described in accordance with preferred embodiments, it is obvious for the person skilled in the art that modifications are possible in all embodiments.

### Reference Numerals:

- 1: system
- A1 - A6: attributes
- C1 - C3: credentials
- CU, C1-C3: certifying unit
- EP: end participant
- FP: final product
- P1, P2: sub-product
- SP1 - SP3: supply participant
- S1 - S11: method steps

## Claims

1. A system (1) for providing credentials (C1, C2, C3) for a product (P1, P2, FP) within a supply chain, the system (1) comprising:
supply participants (SP1, SP2, SP3), each supply participant (SP1, SP2, SP3) being part of the supply chain and providing a product (P1, P2, FP) within the supply chain, wherein the product (P1, P2, FP) is a sub-product (P1, P2) for a final product (FP) or the final product (FP),
an end participant (EP) being the end of the supply chain and receiving the final product (FP), and
a certifying unit (CU, CU1, CU2, CU3),
wherein each supply participant (SP1, SP2, SP3) is configured to communicate with the certifying unit (CU, CU1, CU2, CU3) and the preceding supply participant (SP1, SP2, SP3) as well as the subsequent supply participant (SP1, SP2, SP3) within the supply chain,
wherein each supply participant (SP1, SP2, SP3) is configured to request and to receive a credential (C1, C2, C3) of its product (P1, P2, FP) comprising one or more attributes (A1, A2, A3, A4, A5, A6) from the certifying unit (CU, CU1, CU2, CU3), to adapt and forward the received credential (C1, C2, C3) to the subsequent supply participant (SP1, SP2, SP3), and to forward credentials (C1, C2, C3) received from the preceding supply participant (SP1, SP2, SP3) to the subsequent supply participant (SP1, SP2, SP3).

2. The system according to claim 1, wherein each supply participant (SP1, SP2, SP3) is configured to adapt a credential (C1, C2, C3) by selecting one or more attributes (A1, A2, A3, A4, A5, A6) to be included in the credential (C1, C2, C3).

3. The system according to any one of the preceding claims, wherein each supply participant (SP1, SP2, SP3) is configured to adapt the credential (C1, C2, C3) of its own product (P1, P2, FP) and to adapt credentials (C1, C2, C3) of products (P1, P2, FP) of preceding supply participants (SP1, SP2, SP3) .

4. The system according to any one of the preceding claims, wherein each supply participant (SP1, SP2, SP3) is configured to forward one or more of the credentials (C1, C2, C3) of the preceding supply participants (SP1, SP2, SP3).

5. The system according to any one of the preceding claims, wherein a credential (C1, C2, C3) is provided as JSON web token.

6. The system according to any one of the preceding claims, wherein the certifying unit (CU) comprises a plurality of certifiers (CU1, CU2, CU3).

7. The system according to any one of the preceding claims, wherein the supply participant (SP3), being last in the supply chain and providing the final product (FP) as product (P1, P2, FP), is configured to forward the credential (C3) of the final product (FP) and one or more of the credentials (C1, C2) of the products (P1, P2) of the preceding supply participants (SP1, SP2) to the end participant (EP).

8. The system according to any one of the preceding claims, wherein the certifying unit (CU, CU1, CU2, CU3) is configured to certify the credential (C1, C2, C3) before sending the credential (C1, C2, C3) to the respective requesting supply participant (SP1, SP2, SP3).

9. A method for providing credentials (C1, C2, C3) for a product (P1, P2, FP) within a supply chain within a system (1), the system (1) comprising:
supply participants (SP1, SP2, SP3), each supply participant (SP1, SP2, SP3) being part of the supply chain and providing a product (P1, P2, FP), the product (P1, P2, FP) being a sub-product (P1, P2) for the final product (FP) or the final product (FP),
an end participant (EP) being the end of the supply chain and receiving the final product (FP), and
a certifying unit (CU, CU1, CU2, CU3),
wherein each supply participant (SP1, SP2, SP3) is configured to communicate with the certifying unit (CU, CU1, CU2, CU3) and the preceding supply participant (SP1, SP2, SP3) as well as the subsequent supply participant (SP1, SP2, SP3) within the supply chain,
wherein the method comprises:
requesting (S1, S5, S9) and receiving (S2, S6, S10) a credential (C1, C2, C3) of a product (P1, P2, FP) of a supply participant (SP1, SP2, SP3) comprising one or more attributes (A1, A2, A3, A4, A5, A6) from the certifying unit (CU, CU1, CU2, CU3),
adapting (S3, S7, S11) and forwarding (S4, S8, S12) the received credential (C1, C2, C3) to a subsequent supply participant (SP1, SP2, SP3), and
forwarding (S4, S8, S12) the credentials (C1, C2, C3) received from a preceding supply participant (SP1, SP2, SP3) to the subsequent supply participant (SP1, SP2, SP3).

10. The method according to claim 9, wherein the method further comprises, adapting (S3, S7, S11) a credential (C1, C2, C3) by selecting one or more attributes (A1, A2, A3, A4, A5, A6) to be included in the credential (C1, C2, C3).

11. The method according to any one of the claims 9 or 10, wherein the method further comprises adapting the credential (C1, C2, C3) of the product (P1, P2, FP) of a supply participant (SP1, SP2, SP3) and adapting credentials (C1, C2, C3) of products (P1, P2, FP) of preceding supply participants (SP1, SP2, SP3).

12. The method according to any one of the claims 9-11, wherein the method further comprises forwarding (S8, S12) one or more of the credentials (C1, C2) of the preceding supply participants (SP1, SP2).

13. The method according to any one of the claims 9-12, wherein the method further comprises forwarding (S12) the credential (C3) of the final product (FP) and one or more of the credentials (C1, C2) of products (P1, P2) of the preceding supply participants (SP1, SP2) from the supply participant (SP3), being last in the supply chain and providing the final product (FP) as product (P1, P2, FP), to the end participant (EP).

14. The method according to any one of the claims 9-13, wherein the method further comprises certifying the credential (C1, C2, C3) before sending the credential (C1, C2, C3) to the respective requesting supply participant (SP1, SP2, SP3).

15. A computer program product comprising a program code for executing the method for providing credentials (C1, C2, C3) for a product (P1, P2, FP) within a supply chain according to any one of the claims 9-14.
